# EUROPEAN PATENT APPLICATION

(11) **EP 1 193 693 A1**
(43) Date of publication of application: **03.04.2002**
(21) Application number: 99926931.9
(22) Date of filing: 05.07.1999
(51) Int. Cl.: G11B 5/39

(54) **SPIN BULB MAGNETORESISTANCE EFFECT HEAD AND COMPOUND MAGNETIC HEAD USING IT AND MAGNETIC RECORDING MEDIUM DRIVE UNIT**

(71) Applicant: FUJITSU LIMITED, Kawasaki-shi, Kanagawa 211-8588 (JP)
(72) Inventor: NOMA, Kenji c/o Fujitsu Limited, Kawasaki-shi, Kanagawa 211-8588 (JP); KANAI, Hitoshi c/o Fujitsu Limited, Kawasaki-shi, Kanagawa 211-8588 (JP); KANE, Junichi c/o Fujitsu Limited, Kawasaki-shi, Kanagawa 211-8588 (JP); AOSHIMA, Kenichi c/o Fujitsu Limited, Kawasaki-shi, Kanagawa 211-8588 (JP)
(74) Representative: Fenlon, Christine Lesley
(86) International application number: JP9903614
(87) International publication number: WO0103131

(57) **Abstract**

A spin valve magnetoresistive head using a hard ferromagnetic layer, and a magnetic recording medium drive device using this head are provided.

The spin valve magnetoresistive head includes at least a free magnetic layer, a nonmagnetic metal layer, a pinned magnetic layer, an antiparallel coupling intermediate layer and a hard ferromagnetic layer, wherein the magnetic direction of the pinned magnetic layer and the magnetic direction of the hard ferromagnetic layer are made substantially antiparallel by the antiparallel coupling intermediate layer. The magnetic recording medium drive device uses this head.

## Description

### Technical Field

The present invention relates to a head of a spin valve magnetoresistive type and, more particularly, to a spin valve magnetoresistive head using a hard ferromagnetic layer to fix a magnetic direction of a pinned magnetic layer, and to a magnetic recording medium drive device having this spin valve magnetoresistive head mounted thereon.

### Background Art

Currently, an anisotropic magnetoresistive (AMR) element is most frequently used in a magnetic head mounted on a magnetic recording medium drive device, such as a hard disk drive (HDD). However, as a recording density has been increasing, the movement to put to practical use a magnetic head of a spin valve magnetoresistive type (hereinafter referred to as an SVMR head) using a more sensitive spin valve magnetoresistive (SVMR) element has become full-scale, and the SVMR head has begun to be manufactured as products.

There are conventionally two types of the SVMR head according to a general classification; i.e., a type employing an antiferromagnetic layer so as to provide a unidirectional anisotropy for a pinned magnetic layer widely employed in general; and a type employing a hard ferromagnetic layer in place of the antiferromagnetic layer.

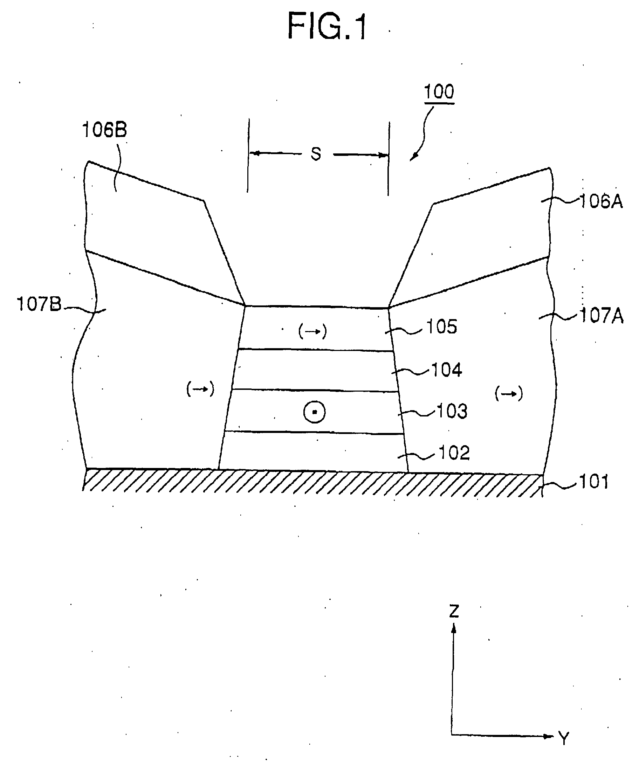

First, an SVMR head 100 of the type employing the antiferromagnetic layer is structured, for example, as shown in FIG.1. In FIG.1, an antiferromagnetic layer 102, a pinned magnetic layer 103, a nonmagnetic layer 104, and a free magnetic layer 105 are laminated in this order on a substrate 101 so as to form an SVMR element portion. The SVMR element portion is formed such that a sense region S sensing a signal magnetic field Hsig from a magnetic recording medium, such as a hard disk, corresponds to a track width of the magnetic recording medium. In these track-width directions, terminal portions are provided on both ends of the SVMR element portion. These terminal portions are formed, for example, by laminating conductive electrode terminals 106A and 106B on the upper side of hard ferromagnetic layers 107A and 107B, respectively.

During an operation of the above-mentioned SVMR head 100, a sense current Is is provided in the sense region S between the two electrode terminals 106A and 106B. In this state, when the SVMR head 100 is moved along the vicinity of a hard disk (not shown in the figure) as the magnetic recording medium, a magnetic direction of the free magnetic layer 105 revolves corresponding to the signal magnetic field Hsig from the hard disk such that an electrical resistance of the SVMR head 100 successively varies. Accordingly, magnetic data recorded on the hard disk can be detected as a voltage change between the electrode terminals 106A and 106B.

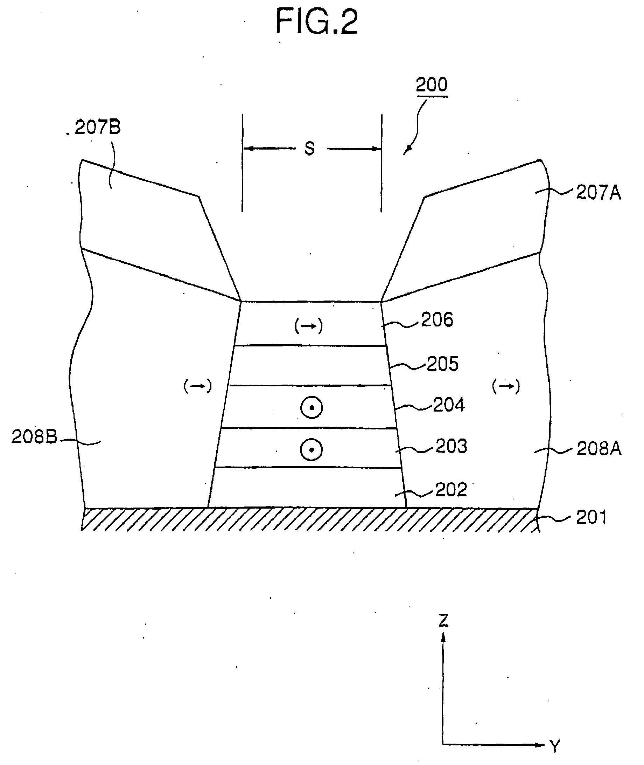

FIG.2 shows an SVMR head 200 of the other type employing the hard ferromagnetic layer. This SVMR head 200 is formed by laminating an underlying layer 202, a hard ferromagnetic layer 203, a pinned magnetic layer 204, a nonmagnetic layer 205, and a free magnetic layer 206 are laminated in this order on a substrate 201 so as to form an SVMR element portion. In terminal portions on both sides thereof, electrode terminals 207A and 207B are formed on the upper side of hard ferromagnetic layers 208A and 208B, respectively, as in the SVMR head 100 shown in FIG.1. This SVMR head 200, also, is formed such that a sense region S sensing a signal magnetic field Hsig from a magnetic recording medium, such as a hard disk, corresponds to a track width of the magnetic recording medium.

By the way, in the above-mentioned SVMR heads 100 and 200, it is preferred that the resistance change of the SVMR element with respect to the signal magnetic field Hsig from the magnetic recording medium is made linear. Therefor, in FIG.1 and FIG.2, the magnetic directions of the pinned magnetic layers 103 and 204 are fixed toward the front in X-directions (a direction perpendicular to the surface of the figure) as indicated by symbols of arrows. Additionally, it is arranged that magnetic directions of the free magnetic layers 105 and 206 be directed in Y-directions (a direction horizontal to the surface of the figure) when the signal magnetic field Hsig from the magnetic recording medium is zero. That is because an optimal condition is that magnetic directions of the pinned magnetic layers 103 and 204 and magnetic directions of the free magnetic layers 105 and 206 are substantially perpendicular to each other. If this relation between the pinned magnetic layer and the free magnetic layer can be maintained, the magnetic direction of the free magnetic layer revolves with respect to the signal magnetic field Hsig from the external magnetic recording medium so as to vary the resistance of the SVMR element linearly. It is noted that Y-directions are directions of easy magnetization axes of the free magnetic layers 105 and 206.

Here, the essential difference between the above-described two types of the SVMR heads 100 and 200 is that, whereas the one fixes the magnetic direction of the pinned magnetic layer by an exchange combination magnetic field employing the antiferromagnetic layer in the SVMR element, the other fixes the magnetic direction of the pinned magnetic layer by an exchange magnetic field employing the hard ferromagnetic layer in the SVMR element.

It is noted that, in the present Description, the term "the direction" or "the directions" is used when a certain direction is indicated by an arrow, etc., and the word "a direction" or "directions" is used when the direction is out of consideration in the forward and backward directions.

Incidentally, regarding the SVMR head 100 of the above-mentioned antiferromagnetic-layer type, there are two cases where a regular manganese (Mn) alloy having a high Neel temperature is used as an antiferromagnetic-layer material of the element portion, and where an irregular manganese alloy having a low Neel temperature, or an oxide, such as a nickel oxide (NiO), is used as the antiferromagnetic-layer material of the element portion. At this point, there is an advantage that the SVMR head using the regular Mn alloy has a high exchange combination magnetic field of several hundred oersteds (Oe) and heat resistivity. However, a layer thickness equal to or more than 200 Å is necessary to surely fix the magnetic direction of the pinned magnetic layer. Yet, in order to increase the recording density, it is indispensable that the SVMR element be made into a thinner-film form; thus, there is a defect of being unable to meet the requirement toward the thinner-film form.

Additionally, the SVMR head using the irregular manganese alloy or an oxide can obtain a necessary antiferromagnetism even when the antiferromagnetic layer of the element portion is a thin layer of approximately 50 Å; however, this SVMR head has defects of being inferior in heat resistivity and having a small combination magnetic field.

On the other hand, the SVMR head 200 of the above-mentioned hard ferromagnetic layer type has advantages of exhibiting a combination magnetic field of several hundred oersteds (Oe) and a high heat resistivity as well, even when a layer thickness of the hard ferromagnetic layer of the element portion is 50 Å. That is, this means that all the defects stated in regard of the above-described SVMR head of the antiferromagnetic-layer type are solved. Therefore, there has been contrived an SVMR head fixing a magnetic direction of the pinned magnetic layer by having the hard ferromagnetic layer as a single layer or a double layer. However, since the SVMR head of the hard ferromagnetic layer type employs a hard ferromagnetic material having a high coercive force, the SVMR head of the hard ferromagnetic layer type has the following three problems different from those of the SVMR head of the antiferromagnetic-layer type.

That is, firstly, there is a case where a magnetostatic field leaking from the hard ferromagnetic layer poses ill influences on magnetic data recorded on the magnetic recording medium. Secondly, there is a case where the magnetostatic field leaking from the hard ferromagnetic layer also exerts influences upon the free magnetic layer such that a reproduction waveform loses symmetry. Further, thirdly, there is a case where a magnetic direction of the hard ferromagnetic layer per se is inclined, due to influences of the signal magnetic field Hsig of approximately 100-200 Oe from the magnetic recording medium, and as a result, a magnetic direction of the pinned magnetic layer is inclined.

### Disclosure of Invention

It is a general object of the present invention to provide a spin valve magnetoresistive head solving the three problems that the conventional SVMR head of the hard ferromagnetic layer type has, and a magnetic recording medium drive device using this head.

The above-mentioned object is achieved by a spin valve magnetoresistive head including at least a free magnetic layer, a nonmagnetic metal layer, a pinned magnetic layer, a hard ferromagnetic layer applying a bias magnetic field to said pinned magnetic layer so as to fix a magnetic direction of the pinned magnetic layer, and an antiparallel coupling intermediate layer provided between said pinned magnetic layer and said hard ferromagnetic layer so as to make a magnetic direction of said bias magnetic field from said hard ferromagnetic layer substantially antiparallel to a magnetic direction of the hard ferromagnetic layer and apply the magnetic direction of said bias magnetic field to said pinned magnetic layer, as claimed in claim 1.

In the invention claimed in claim 1, when the antiparallel coupling intermediate layer is provided between the hard ferromagnetic layer and the pinned magnetic layer, the antiparallel coupling intermediate layer has a function of making the magnetic direction of the bias magnetic field from the hard ferromagnetic layer parallel and opposite (hereinafter, antiparallel), and applying the magnetic direction of the bias magnetic field to the pinned magnetic layer. Therefore, the pinned magnetic layer and the hard ferromagnetic layer are magnetically coupled in an antiparallel state, with the antiparallel coupling intermediate layer therebetween. Since the magnetic direction of the hard ferromagnetic layer and the magnetic direction of the hard ferromagnetic layer become opposite to each other, a magnetic loop closes such that the pinned magnetic layer and the hard ferromagnetic layer are firmly coupled magnetically. Therefore, a magnetic field leaking externally from the hard ferromagnetic layer is constrained so as to reduce ill influences to the exterior. Additionally, when the pinned magnetic layer and the hard ferromagnetic layer are subjected to influences of an external magnetic field, magnetic directions are also kept from inclining.

Besides, if necessary, a protective layer, an insulating layer, a gap layer, etc. may be added in the above-mentioned spin valve magnetoresistive head.

Additionally, as claimed in claim 2, in the spin valve magnetoresistive head claimed in claim 1, said hard ferromagnetic layer per se is preferred to have a coercive force Hc equal to or more than at least 600 Oe. Having a coercive force Hc of at least 600 Oe prevents a magnetic direction of the hard ferromagnetic layer from inclining due to influences from an external magnetic field.

Besides, as claimed in claim 3, in the spin valve magnetoresistive head claimed in claim 2, it is preferred that said hard ferromagnetic layer and said pinned magnetic layer are composed of different materials, and that said hard ferromagnetic layer is arranged to have the coercive force Hc larger than said pinned magnetic layer and a magnetic moment tBr equal to or larger than said pinned magnetic layer.

Setting the magnetic moment of the hard ferromagnetic layer large can increase an effective anisotropic magnetic field Hua of the pinned magnetic layer.

A detailed description will be given of this point. In order that a lamination having the above-mentioned structure functions as the spin valve magnetoresistive head of the present invention, it is preferred that the hard ferromagnetic layer is in as immovable a state as possible with respect to the signal magnetic field Hsig. Therefor, firstly, the hard ferromagnetic layer is preferred to have a coercive force Hc of at least 600 Oe. On the other hand, the pinned magnetic layer is preferred to have a coercive force Hc smaller than the coercive force Hc of the hard ferromagnetic layer, for example, equal to or smaller than 10 Oe.

The manufacture of the spin valve magnetoresistive head includes a polarizing step by applying an external magnetic field so as to align a magnetic direction of the hard ferromagnetic layer in the same direction as the signal magnetic field Hsig. In this course, since the exchange combination magnetic field received from the pinned magnetic layer is approximately 2 to 6 kOe, unless an external magnetic field exceeding this is applied, the hard ferromagnetic layer cannot be fixed in a desired direction. Upon this polarization, if the pinned magnetic layer has a large coercive force, the pinned magnetic layer and the hard ferromagnetic layer will not be directed substantially antiparallel even when the external magnetic field is made zero after the polarization.

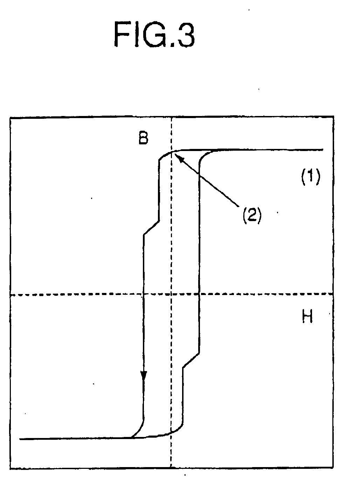

FIG.3 is a B-H loop of a lamination in which ruthenium (Ru) as the antiparallel coupling intermediate layer is provided between two cobalt-platinum (PtCo) films having equal magnetic moments (B) and coercive forces (H). In the above-mentioned polarizing step, an external magnetic field, for example 12 kOe, exceeding the exchange combination magnetic field is applied, in (1), and thereafter, a zero magnetic field is restored, in (2). However, since the CoPt films have high coercive forces, even the exchange combination magnetic field cannot make the CoPt films antiparallel, and both CoPt films are fixed obliquely in a polarizing direction. This cannot achieve a preferable effect.

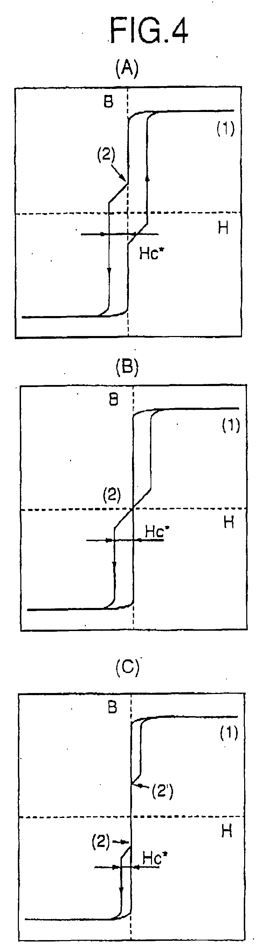

FIG.4(A), (B) and (C) are B-H loops in cases where an NiFe film is used as the pinned magnetic layer and a CoPt film is used as the hard ferromagnetic layer. (A) shows a case where the magnetic moment of the CoPt film is larger than the NiFe, (B) shows a case where the magnetic moment of the CoPt film is the same as the NiFe, and (C) shows a case where the magnetic moment of the CoPt film is smaller than the NiFe.

In the same polarizing step as above, after the polarization in (1), both magnetizations are directed antiparallel in the state of (2). In the cases of (A) and (B) where the magnetic moment of the CoPt film is equal to or larger than the NiFe film, simply applying ±200 Oe as the signal magnetic field Hsig cannot cause the magnetic directions of the pinned magnetic layer and the hard ferromagnetic layer to change from (2). On the other hand, in the case of (C) where the magnetic moment of the CoPt film is smaller than the NiFe film, after the polarization, the magnetic directions of the pinned magnetic layer and the hard ferromagnetic layer are in the state of (2). However, a magnetic field Hc* for reversing the hard ferromagnetic layer becomes relatively low, compared to (A) and (B), and a force to hold the pinned magnetic layer becomes weak. This is because the pinned magnetic layer becomes more reactive to an external magnetization to the extent that the moment of the pinned magnetic layer becomes larger. Therefore, the magnetization of the pinned magnetic layer becomes more likely to revolve. As a result, the exchange combination magnetic field applied to the hard ferromagnetic layer becomes relatively strong so as to be more likely to reverse.

From the above-described point, it can be understood that the hard ferromagnetic layer is preferred to be arranged to have a coercive force Hc larger than the pinned magnetic layer and a magnetic moment tBr equal to or larger than the pinned magnetic layer.

Additionally, as claimed in claim 4, in the spin valve magnetoresistive head claimed in claim 3, said pinned magnetic layer may comprise a layer including cobalt-iron (CoFe) or cobalt-iron-boron (CoFeB), said hard ferromagnetic layer may comprise a layer including one selected from a group consisting of cobalt (Co), cobalt-chromium (CoCr), cobalt-platinum (CoPt), cobalt-chromium-tantalum (CoCrTa), cobalt-chromium-platinum (CoCrPt), cobalt-chromium-tantalum-platinum (CoCrTaPt), samarium-cobalt (SmCo), and cobalt-iron-oxide (Co-Fe-Oxide), and said antiparallel coupling intermediate layer may comprise a layer including ruthenium (Ru).

Further, as claimed in claim 5, in the spin valve magnetoresistive head claimed in one of claims 1 to 4, it is more preferable that an effective anisotropic magnetic field of said pinned magnetic layer is equal to or more than 600 Oe, and in a case where an external magnetic field is zero, the magnetic direction of said pinned magnetic layer and a magnetic direction of said free magnetic layer are arranged to be at a right angle or within 20 degrees before or after said right angle to each other.

When the effective anisotropic magnetic field of said pinned magnetic layer is equal to or more than 600 Oe, a magnetic direction of the pinned magnetic layer can be prevented from inclining due to influences from an external magnetic field. When a magnetic direction of the pinned magnetic layer and an easy magnetization axis of the free magnetic layer are at a right angle or within 20 degrees before or after said right angle to each other, a magnetic direction of the free magnetic layer can revolve sensitively with respect to the signal magnetic field Hsig from a magnetic recording medium so as to vary the resistance of an SVMR element linearly.

Additionally, as claimed in claim 6, in the spin valve magnetoresistive head claimed in claim 3, terminal portions may be provided on both ends of an element portion in track-width directions, the terminal portions including a lamination composed of at least a conductive layer and a antiferromagnetic layer. In this case, an exchange combination magnetic field from the antiferromagnetic layer of the terminal portions magnetizes the free magnetic layer in a direction of the easy magnetization axis.

Additionally, as claimed in claim 7, in the spin valve magnetoresistive head claimed in claim 6, the pinned magnetic layer of said element portion may comprise a layer including cobalt-iron or cobalt-iron-boron, the hard ferromagnetic layer may comprise a layer including one selected from a group consisting of cobalt, cobalt-chromium, cobalt-platinum, cobalt-chromium-tantalum, cobalt-chromium-platinum, cobalt-chromium-tantalum-platinum, samarium-cobalt, and cobalt-iron-oxide, the antiparallel coupling intermediate layer may comprise a layer including ruthenium, and the antiferromagnetic layer of said terminal portions may comprise a layer including one selected from a group consisting of palladium-platinum-manganese (PdPtMn), platinum-manganese (PtMn), palladium-manganese (PdMn), nickel-manganese (NiMn), chromium-manganese (CrMn), and nickel oxide (NiO).

Additionally, as claimed in claim 8, in the spin valve magnetoresistive head claimed in claim 3, terminal portions may be provided on both ends of an element portion in track-width directions, the terminal portions including a lamination composed of at least a conductive layer and a hard ferromagnetic layer. In this case, a magnetostatic field from the hard ferromagnetic layer of the terminal portions magnetizes the free magnetic layer in a direction of the easy magnetization axis.

Additionally, as claimed in claim 9, in the spin valve magnetoresistive head claimed in claim 8, it is preferred that the hard ferromagnetic layer of the element portion of the spin valve magnetoresistive head and the hard ferromagnetic layer of the terminal portions are composed of different materials. This facilitates the setting of a magnetic direction of the hard ferromagnetic layer of the element portion and a magnetic direction of the hard ferromagnetic layer of the terminal portions in a substantially perpendicular state.

In this case, as claimed in claim 10, in the spin valve magnetoresistive head claimed in claim 9, the pinned magnetic layer of said element portion may comprise a layer including cobalt-iron or cobalt-iron-boron, the hard ferromagnetic layer may comprise a layer including one selected from a group consisting of cobalt, cobalt-chromium, cobalt-platinum, cobalt-chromium-tantalum, cobalt-chromium-platinum, cobalt-chromium-tantalum-platinum, samarium-cobalt, and cobalt-iron-oxide, the antiparallel coupling intermediate layer may comprise a layer including ruthenium, and the hard ferromagnetic layer of said terminal portions may comprise a layer including one selected from a group consisting of cobalt, cobalt-chromium, cobalt-platinum, cobalt-chromium-tantalum, cobalt-chromium-platinum, cobalt-chromium-tantalum-platinum, samarium-cobalt, and cobalt-iron-oxide (CoFeO).

Further, as claimed in claim 11, the present invention also includes a composite-type magnetic head having a magnetic head used for reproducing and a magnetic head used for recording, wherein the magnetic head used for reproducing is a spin valve magnetoresistive head including at least a free magnetic layer, a nonmagnetic metal layer, a pinned magnetic layer, a hard ferromagnetic layer applying a bias magnetic field to said pinned magnetic layer so as to fix a magnetic direction of the pinned magnetic layer, and an antiparallel coupling intermediate layer provided between said pinned magnetic layer and said hard ferromagnetic layer so as to make a magnetic direction of said bias magnetic field from said hard ferromagnetic layer substantially antiparallel to a magnetic direction of the hard ferromagnetic layer and apply the magnetic direction of said bias magnetic field to said pinned magnetic layer, said hard ferromagnetic layer per se has a coercive force Hc equal to or more than at least 600 Oe, said hard ferromagnetic layer and said pinned magnetic layer are composed of different materials, and said hard ferromagnetic layer is arranged to have the coercive force Hc larger than said pinned magnetic layer and a magnetic moment tBr equal to or larger than said pinned magnetic layer.

Further, as claimed in claim 12, the present invention also includes a magnetic recording medium drive device including a composite-type magnetic head opposite to surfaces of a magnetic recording medium and a recording medium, the composite-type magnetic head being used for recording/reproducing, wherein a spin valve magnetoresistive head is mounted as a reproducing magnetic head unit of said composite-type magnetic head, the spin valve magnetoresistive head including at least a free magnetic layer, a nonmagnetic metal layer, a pinned magnetic layer, a hard ferromagnetic layer applying a bias magnetic field to said pinned magnetic layer so as to fix a magnetic direction of the pinned magnetic layer, and an antiparallel coupling intermediate layer provided between said pinned magnetic layer and said hard ferromagnetic layer so as to make a magnetic direction of said bias magnetic field from said hard ferromagnetic layer substantially antiparallel to a magnetic direction of the hard ferromagnetic layer and apply the magnetic direction of said bias magnetic field to said pinned magnetic layer, said hard ferromagnetic layer per se has a coercive force Hc equal to or more than at least 600 Oe, said hard ferromagnetic layer and said pinned magnetic layer are composed of different materials, and said hard ferromagnetic layer is arranged to have the coercive force Hc larger than said pinned magnetic layer.and a magnetic moment tBr equal to or larger than said pinned magnetic layer.

### Brief Description of Drawings

FIG.1 is an illustration showing an example of a structure of an SVMR head of a conventional type employing an antiferromagnetic layer;
FIG.2 is an illustration showing an example of a structure of an SVMR head of a conventional type employing a hard ferromagnetic layer;
FIG.3 is an illustration showing a B-H loop of a lamination in which ruthenium (Ru) as an antiparallel coupling intermediate layer is provided between two cobalt-platinum (PtCo) films having equal magnetic moments (B) and coercive forces (H);
FIG.4 shows B-H loops in cases where an NiFe film is used as a pinned magnetic layer and a CoPt film is used as a hard ferromagnetic layer, wherein (A) is an illustration showing a case where a magnetic moment of the CoPt film is larger than the NiFe, (B) is an illustration showing a case where a magnetic moment of the CoPt film is the same as the NiFe, and (C) is an illustration showing a case where a magnetic moment of the CoPt film is smaller than the NiFe:
FIG.5 is a cross-sectional view of main parts of an SVMR head according to a first embodiment;
FIG.6 is an illustration in which the SVMR head of the first embodiment is incorporated in a hard disk drive;
FIG.7 is an illustration showing a manufacture flow of the SVMR head employed as a composite-type magnetic head;
FIG.8 is a perspective view showing main parts of an SVMR head of a second embodiment; and
FIG.9 is an illustration showing main parts of a magnetic recording medium drive device on which a magnetic head including the SVMR head of the present invention is mounted.

### Best Mode for Carrying Out the Invention

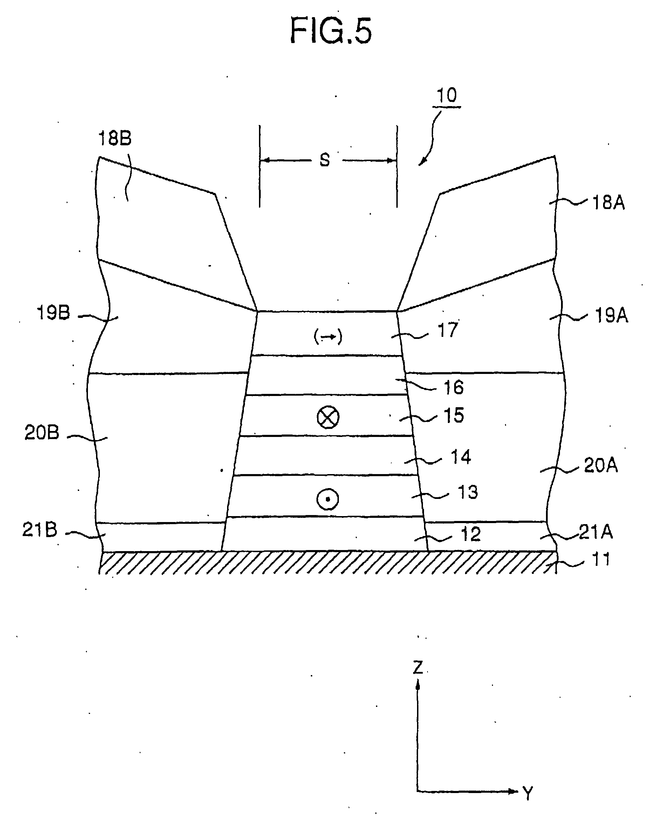

Hereinbelow, a description will be given, with reference to FIG.5, of a first embodiment of the present invention. FIG.5 is a cross-sectional view of main parts of an SVMR head 10 according to the first embodiment of the present invention. The present embodiment sets forth an example using an antiferromagnetic layer in a terminal portion of the SVMR head of the present invention so as to produce a magnetization of a free magnetic layer by an exchange combination magnetic field from this antiferromagnetic layer.

An SVMR element portion forming the body of the SVMR head 10 includes an underlying layer 12, a hard ferromagnetic layer 13, an antiparallel coupling intermediate layer 14, a pinned magnetic layer 15, a nonmagnetic layer 16, and a free magnetic layer 17 on an insulating aluminum or ceramic substrate 11. These are laminated in this order from the bottom.

The hard ferromagnetic layer 13 is provided so as to fix the magnetic direction of the pinned magnetic layer 15 predeterminately by applying a bias magnetic field to the pinned magnetic layer 15.

The hard ferromagnetic layer 13 is magnetically coupled with the pinned magnetic layer 15 with the antiparallel coupling intermediate layer 14 therebetween. The magnetic direction of the pinned magnetic layer 15 becomes substantially antiparallel to the magnetic direction of a bias magnetization applied from the hard ferromagnetic layer 13 by having the antiparallel coupling intermediate layer 14 therebetween. Therefore, the hard ferromagnetic layer 13 and the pinned magnetic layer 15 together form a closed magnetic circuit so that a magnetic field leaking externally from the hard ferromagnetic layer 13 and the pinned magnetic layer 15 is constrained. Further, the hard ferromagnetic layer 13 and the pinned magnetic layer 15 come into a relationship assisting each other against an external magnetic field affecting the magnetic directions of their own, because these are coupled magnetically with each other. Specifically, when the pinned magnetic layer 15 is subjected to an external magnetic field that might incline the pinned magnetic layer 15, the existence of the magnetic coupling with the hard ferromagnetic layer 13 prevents a magnetic direction of the pinned magnetic layer 15 from inclining. When the hard ferromagnetic layer 13 is subjected to an external magnetic field, the similar relationship also prevents an inclination.

Besides, it is sufficient that a magnetic direction of the hard ferromagnetic layer 13 and a magnetic direction of the pinned magnetic layer 15, which are made substantially antiparallel by the above-mentioned antiparallel coupling intermediate layer 14, are in an antiparallel state allowing an inaccuracy in angle within 10 to each other. In FIG.5, the direction of each of arrows indicates that the magnetic direction of the hard ferromagnetic layer 13 is toward the front in X-directions, and the magnetic direction of the pinned magnetic layer 15 is toward the back in the X-directions, as an example.

Here, chromium (Cr) can be used as the underlying layer 12. A layer including one of cobalt (Co), cobalt-chromium (CoCr), cobalt-platinum (CoPt), cobalt-chromium-tantalum (CoCrTa), cobalt-chromium-platinum (CoCrPt), cobalt-chromium-tantalum-platinum (CoCrTaPt), and samarium-cobalt (SmCo) can be used as the hard ferromagnetic layer 13. A layer including ruthenium (Ru) can be used as the antiparallel coupling intermediate layer 14. A layer including cobalt-iron (CoFe) or cobalt-iron-boron (CoFeB) can be used as the pinned magnetic layer 15. A layer including copper (Cu) can be used as the nonmagnetic layer 16. A layer including nickel-iron (NiFe), cobalt-iron (CoFe), and cobalt-iron-boron (CoFeB) can be used as the free magnetic layer 17. If necessary, a protective layer, an insulating layer, a gap layer, etc. may be added.

Besides, the hard ferromagnetic layer 13 has a high coercive force Hc of at least 600 Oe or more as a single layer. It is arranged that the hard ferromagnetic layer 13 be larger than the pinned magnetic layer 15 with respect to the coercive force Hc and a magnetic moment tBr. Additionally, making an effective anisotropic magnetic field Hua of the pinned magnetic layer 15 small provides an effect of making the externally leaking magnetic field smaller. Accordingly, in consideration of the balance of these effects, the magnetic moment of the hard ferromagnetic layer 13 and the magnetic moment of the pinned magnetic layer 15 are determined. In addition, normally, different materials are employed as the hard ferromagnetic layer 13 and the pinned magnetic layer 15. For example, a combination of cobalt-platinum as the hard ferromagnetic layer 13 and cobalt-iron-boron as the pinned magnetic layer 15 can be employed.

Terminal portions are provided on both ends of the above-mentioned SVMR head 10. These terminal portions include underlying layers 21A and 21B, antiferromagnetic layers 20A and 20B, protective layers 19A and 19B, and conductive electrode terminals 18A and 18B, respectively, which are formed by being laminated in this order from the bottom. If necessary, protective layers, insulating layers, etc. are added.

The above-mentioned antiferromagnetic layers 20A and 20B provide the free magnetic layer 17 with an exchange combination magnetic field substantially perpendicular to a magnetic direction of the pinned magnetic layer 15. A layer including one selected from palladium-platinum-manganese (PdPtMn), platinum-manganese (PtMn), palladium-manganese (PdMn), nickel-manganese (NiMn), chromium-manganese (CrMn), and nickel oxide (NiO) can be used as the antiferromagnetic layer 20. A layer including nickel-iron (NiFe) can be used as the underlying layer 21 here. A layer including tantalum (Ta) can be used as the protective layer 19. A layer including gold (Au) can be used as the electrode terminal 18, and a sense Is current is provided between these electrode terminals 18A and 18B so as to detect a signal magnetic field Hsig from a magnetic recording medium.

According to the SVMR head of the present first embodiment, the magnetic directions of the hard ferromagnetic layer 13 and the pinned magnetic layer 15 are magnetically coupled with each other so as to be substantially antiparallel to each other in X-directions. Accordingly, the magnetic directions of the hard ferromagnetic layer 13 and the pinned magnetic layer 15 become substantially parallel or antiparallel to the signal magnetic field Hsig supplied in an X-direction from the magnetic recording medium. Additionally, in a state where an external magnetic field is zero, a magnetic direction of the free magnetic layer 17 is subjected to the exchange combination magnetic field from the antiferromagnetic layer 20 provided in both terminal portions so as to be maintained in a Y-direction, i.e., perpendicular to the signal magnetic field Hsig.

Therefore, when the signal magnetic field Hsig is applied externally, a magnetic direction of the free magnetic layer 17 revolves in a direction of the signal magnetic field Hsig; however, a magnetic direction of the pinned magnetic layer 15 is kept fixed such that an angle occurs between a magnetic direction of the free magnetic layer 17 and a magnetic direction of the pinned magnetic layer 15, and a resistance change proportionate to a cosine of the angle is represented as a change in the sense current flowing in the terminal electrode. That is, the signal magnetic field Hsig from the magnetic recording medium can be detected as a voltage change.

By the way, regarding the conventional antiferromagnetic type employing the antiferromagnetic layer in the element portion of the SVMR head, in a case of palladium-platinum-manganese (PdPtMn) being as the antiferromagnetic layer, and cobalt-iron-boron (CoFeB) being as the pinned magnetic layer, the thickness of all the layers totaled approximately 430 A in order to make an effective anisotropic magnetic field Hua of the pinned magnetic layer equal to or more than 600 Oe Also, in a case of using a lamination-type ferri-film of a pinned magnetic layer (CoFeB/Ru/CoFeB) of a triple-layered structure having ruthenium (Ru) as an intermediate layer, the thickness of the layers totaled approximately 320 A.

In addition, when the conventional hard magnetic type employing the hard ferromagnetic layer was used in a magnetic head, the magnetic directions of the hard ferromagnetic layer and the pinned magnetic layer were identical, and the hard ferromagnetic layer needed to be made thin so as to make a leaking magnetic field as small as possible. However, in a case of employing cobalt-platinum (CoPt) as the pinned magnetic layer, a layer thickness equal to or more than 100 Å was necessary, and the problem of the leaking magnetic field could not be solved.

Additionally, a material fixing the magnetic direction of the hard ferromagnetic layer in the intrinsic direction was not provided. Then, since a magnetization in the opposite direction to the magnetic direction of the hard ferromagnetic layer existed in the signal magnetic field Hsig from the magnetic recording medium, a magnetic direction of the hard ferromagnetic layer per se was inclined, due to influences of the signal magnetic field Hsig. Thereby, a magnetic direction of the pinned magnetic layer was also inclined such that a reproduction waveform was distorted.

However, in the SVMR head of the present invention, the hard ferromagnetic layer 13 and the pinned magnetic layer 15 are magnetically coupled with each other via the antiparallel coupling intermediate layer 14, as described above, so that magnetostatic fields of the hard ferromagnetic layer 13 and the pinned magnetic layer 15 figure one closed loop so as to constrain a leaking magnetic field as much as possible. Additionally, the hard ferromagnetic layer 13 and the pinned magnetic layer 15 come into a relationship assisting each other against an external magnetic field so as to prevent magnetic directions from inclining. Further, the hard ferromagnetic layer 13 and the pinned magnetic layer 15 are made thin.

In the present embodiment, the SVMR head was formed with cobalt-platinum (CoPt) of 50 Å as the hard ferromagnetic layer 13 and cobalt-iron-boron (CoFeB) of 22 Å as the pinned magnetic layer 15. Although this SVMR head was a thin layer having the entire thickness of 230 Å, the effective anisotropic magnetic field Hua of the pinned magnetic layer 15 could be made 600 Oe.

The SVMR head 10 of the above-mentioned first embodiment is adopted as a magnetic head used for reproduction, and the magnetic head is used by being mounted on a hard disk drive as a magnetic recording drive device. Hereinbelow, a description will be given of the structure and a manufacturing method of the SVMR head 10 of the present invention.

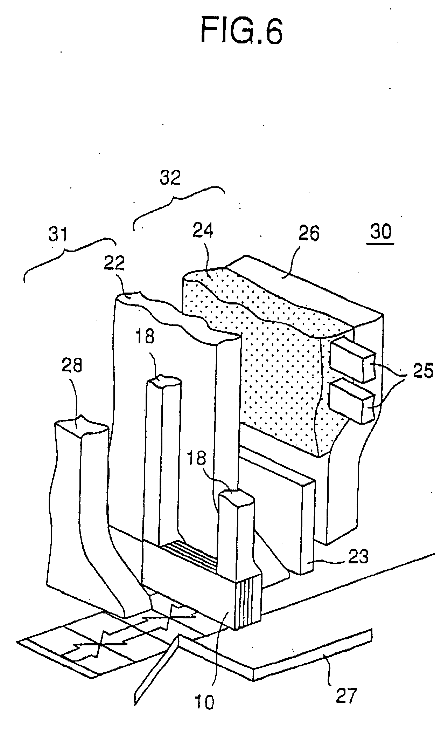

FIG.6 shows an entire structure of a composite-type magnetic head 30 in which the above-mentioned SVMR head 10 shown in FIG.5 is incorporated as a reproducing magnetic head of a hard disk drive, and an inductive-type magnetic head used for a magnetic recording is arranged to coexist. FIG.6 also shows a hard disk 27 as a magnetic recording medium placed opposite this composite-type magnetic head 30.

The SVMR head 10 is adopted as a reproducing magnetic head 31 in the composite-type magnetic head 30. The composite-type magnetic head 30 comprises the reproducing magnetic head 31 and a recording magnetic head 32, according to a broad description. The composite-type magnetic head 30 is of a merge type in which a reproducing upper shield 22 of the reproducing magnetic head 31 is used also as a recording lower magnetic pole (a lower core) of the recording magnetic head 32, and has a piggyback structure in which the recording magnetic head 32 is added on the back of the reproducing magnetic head 31.

That is, as shown in FIG.6, the reproducing magnetic head 31 includes the SVMR element, and comprises this SVMR element, the electrode terminals 18A and 18B provided on both ends thereof, and a reproducing lower shield 28 and the reproducing upper shield 22 placed on both sides thereof.

The above-mentioned magnetic recording head 32 comprises a magnetic recording coil 25, an organic insulating layer 24 surrounding the periphery of this recording coil, and the recording lower magnetic pole 22 and a recording upper magnetic pole 26 positioned on both sides of the organic insulating layer 24 and a magnetic gap film 23. At this time, the reproducing lower shield 22 is used also as the recording lower magnetic pole of a recording unit. The recording upper magnetic pole 22 is fixed via the organic insulating layer 24 and the magnetic gap film 23 provided between the recording upper magnetic pole 22 and the recording upper magnetic pole 26 placed opposite thereto. The magnetic recording coil 25 is embedded in the organic insulating layer 24. As described above, in the present composite-type magnetic head 30, the reproducing magnetic head 31 and the recording magnetic head 32 are unitarily formed.

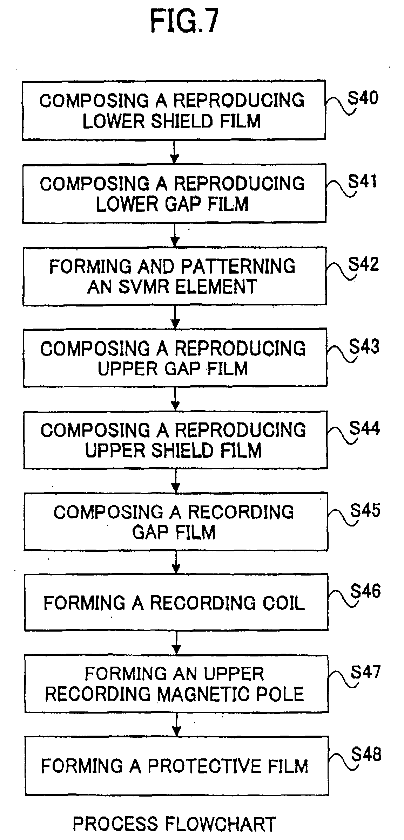

Next, a description will be given based on FIG.7 showing a manufacture flow of the above-mentioned composite-type magnetic head 30, together with the manufacturing method of the SVMR head of the present invention.

First, in step S40, a film of the reproducing lower shield 28 is formed. This reproducing lower shield 28 is composed, for example, of a nitrogen-iron-group material, an Fe-N film.

In step S41, a reproducing lower gap film is formed. The reproducing lower gap film is composed, for example, of an aluminum oxide (Al₂O₃).

In step S42, each of the layers in the element portion of the SVMR head 10 shown in FIG.5 is formed and patterned, and the terminal portions are provided on both ends of the element portion.

Specifically, a lower shield layer composed of a soft-quality hard magnetic material, and an insulating layer are provided on the ceramic substrate 11. Thereon, the element portion of the SVMR head 10 is formed by laminating, for example, a 30-Å chromium (Cr) as the underlying layer 12, a 50-Å cobalt-platinum (CoPt) as the hard ferromagnetic layer 13, an 8-Å ruthenium (Ru) as the antiparallel coupling intermediate layer 14, a 22-Å cobalt-iron-boron (CoFeB) as the pinned magnetic layer 15, a 30-Å copper (Cu) as the nonmagnetic layer 16, a 15-Å cobalt-iron (CoFe) and a 20-Å nickel-iron (NiFe) as the free magnetic layer 17, and a tantalum (Ta) as a protective layer in this order. This lamination is formed by sputtering, for example. The formed SVMR element portion as a whole is patterned into a plane rectangular shape by using a normal photomechanical technology (lithography). Thereafter, in the terminal portions of the SVMR head 10 likewise, the underlying layers 21A and 21B, the antiferromagnetic layers 20A and 20B, and the protective layers 19A and 19B are laminated in this order, and finally, a pair of the conductive electrode terminals 18A and 18B are formed on the protective layers 19A and 19B. Here, for example, a 20-Å nickel-iron (NiFe) can be used as the underlying layer 21, a 50-Å palladium-platinum-manganese (PdPtMn) can be used as the antiferromagnetic layer 20, a tantalum (Ta) can be used as the protective layer 19, and a gold (Au) can be used for the electrode terminal 18.

Besides, in a case where a regular alloy, such as palladium-platinum-manganese (PdPtMn), is used as the antiferromagnetic layer 20, after the terminal portions are formed, a magnetic field is applied in a track-width direction, and a regularizing anneal process is performed at a temperature equal to or higher than a regularizing temperature of the regular alloy. By this process, a magnetic direction of the free magnetic layer 17 is directed into a direction of an easy magnetization axis (a Y-direction). Here, a processing temperature and a processing time of the above-mentioned annealing process, and conditions of the applied magnetic field are set such that a magnetic direction of the free magnetic layer 17 becomes at a right angle or within 20 degrees before or after the right angle to a magnetic direction of the pinned magnetic layer 15. Thereafter, a polarizing process is performed so as to align a magnetic direction of the hard ferromagnetic layer 13 on the element portion side, and at the same time, the magnetic direction of the pinned magnetic layer 15 is fixed.

In step S43, a reproducing upper gap film is formed. The reproducing upper gap film is composed, for example, of an aluminum oxide (Al₂O₃).

In step S44, the reproducing upper shield 22 is formed. This reproducing upper shield 22 is composed, for example, of nickel-iron (NiFe).

In step S45, a recording gap layer is formed.

In step S46, the recording coil 25 is formed.

In step S47, the above-mentioned upper recording magnetic pole 26 is formed.

In step S48, a protective film is formed.

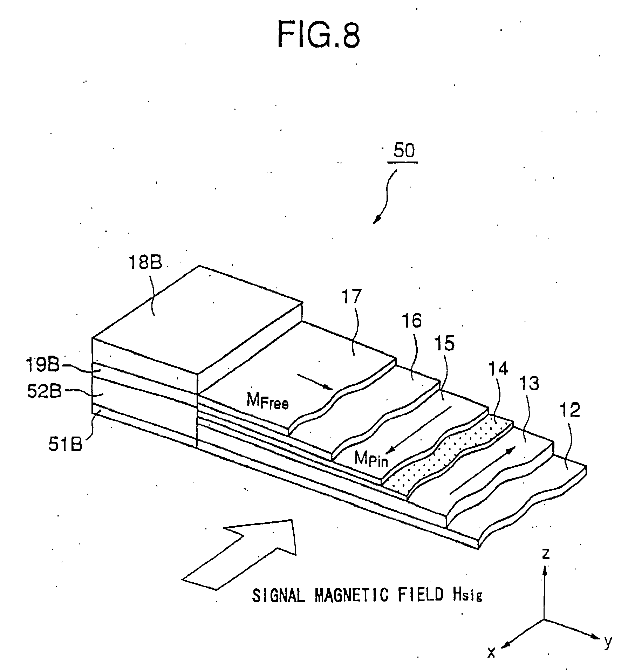

Next, a description will be given, with reference to FIG.8, of a second embodiment of the present invention. FIG.8 is a perspective view showing a half side of an SVMR head of the second embodiment. FIG.8 sets forth an example using a hard ferromagnetic layer in a terminal portion of an SVMR head 50 so as to produce a magnetization of a free magnetic layer by a magnetostatic field from this hard ferromagnetic layer.

Elements identical to the elements shown in FIG.5 are referenced by the same reference marks. In the present embodiment, since an element portion of the SVMR head is similar to the above-described first embodiment, a duplicated description will be omitted, and featured parts will be mainly described.

The SVMR head 50 of the present second embodiment has a different structure of terminal portions provided on both ends. Specifically, an underlying layer 51B(A), a hard ferromagnetic layer 52B(A), the protective layer 19B(A), and the terminal electrode 18B(A) are laminated. Here, one selected from cobalt (Co), cobalt-chromium (CoCr), cobalt-platinum (CoPt), cobalt-chromium-tantalum (CoCrTa), cobalt-chromium-platinum (CoCrPt), cobalt-chromium-tantalum-platinum (CoCrTaPt), samarium-cobalt (SmCo), and cobalt-iron-oxide (CoFeO) can be used as the hard ferromagnetic layer 52 of the terminal portions. For example, a 30-Å iron (Fe) can be used as the underlying layer 51, and a 400-Å samarium-cobalt (SmCo) can be used as the hard ferromagnetic layer 52. A tantalum (Ta) and a gold (Au) can be employed as the protective layer 19 and the terminal electrode 18, respectively, as in the first embodiment.

A manufacture of the SVMR head of the present embodiment is performed according to the manufacturing method described in the first embodiment. However, the present embodiment employs the hard ferromagnetic layer 52, as a result of which the hard ferromagnetic layers are employed in the element portion and the terminal portions of the SVMR head 50. The hard ferromagnetic layer 13 on the one hand functions so as to make a magnetic direction of the pinned magnetic layer 15 substantially parallel to. the signal magnetic field Hsig. The hard ferromagnetic layer 52 on the other hand functions so as to direct a magnetic direction of the free magnetic layer 17 substantially perpendicularly to a magnetic direction of the pinned magnetic layer 15.

Therefor, after the terminal portions are formed, a magnetic heat treatment is performed so as to align a magnetic direction of the hard ferromagnetic layer 52 of the terminal portions into one direction (a Y-direction); thereafter, a magnetic heat treatment is performed so as to direct a magnetic direction of the hard ferromagnetic layer 13 of the SVMR element portion to an X-direction perpendicular to a Y-direction. However, when the first polarizing process to a Y-direction and the latter polarizing process to an X-direction are performed under equal conditions, there occurs a risk that a magnetic direction of the hard ferromagnetic layer 52 on the terminal-portion side set in a Y-direction may incline due to influences of the latter process. Therefore, normally, different materials are selected for the above-mentioned hard ferromagnetic layer 13 and the hard ferromagnetic layer 52, and a processing temperature, a processing time, and an applied magnetic field are varied so as to set processing conditions not to cause inconveniences. It is noted that, depending on hard ferromagnetic layers selected for use in the terminal portions and the element portion, there are cases where the heating becomes unnecessary upon the polarization.

In the present embodiment, a 50-Å cobalt-platinum (CoPt) is employed as the hard ferromagnetic layer 13, and a 400-Å samarium-cobalt (SmCo) is employed as the hard ferromagnetic layer 52. Then, after the polarizing process to the hard ferromagnetic layer 52 of the terminal portions, upon polarizing the hard ferromagnetic layer 13 of the SVMR element portion parallel to the signal magnetic field Hsig, the applied magnetic field is set to such a magnitude that a magnetic direction of the hard ferromagnetic layer 52 of the terminal portions will not revolve.

The SVMR head 50 of the present second embodiment is used as a magnetic head used for a reproduction of a magnetic recording medium, alone or together with a recording head, in the same manner as the SVMR element 10 of the above-mentioned first embodiment.

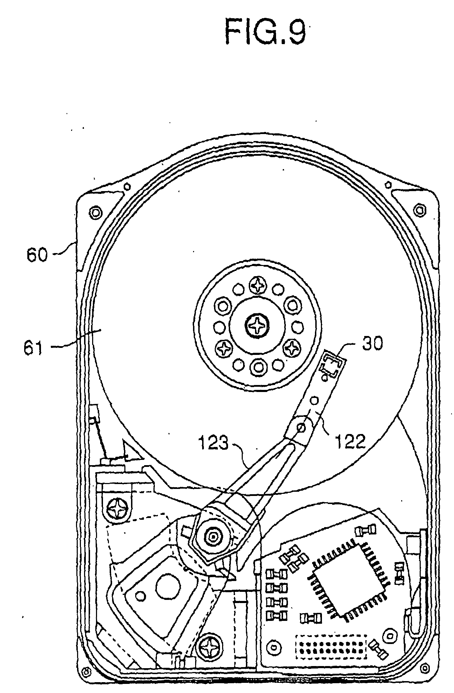

Finally, a brief description will be given of a magnetic recording medium drive device having the spin valve magnetoresistive head of the present invention mounted thereon. FIG.9 is an illustration showing main parts of the magnetic recording medium drive device. A hard disk 61 as a magnetic recording medium is mounted on a magnetic recording medium drive device 60, and is arranged to be caused to rotate. The above-described composite-type magnetic head 30, for example, of the present invention is positioned opposite the surface of the hard disk 61 with a predetermined distance therebetween so as to perform a magnetic recording and a reproduction operation. Besides, the composite-type magnetic head 30 is fixed on a front end of a slider 122 extending from an arm 123. For the positioning of the magnetic head 30, a two-stage actuator formed by combining a normal actuator and an electromagnetic tremor trembling actuator can be employed.

The above-detailed descriptions are given of the preferred embodiments of the present invention; however, the present invention is not limited to these specific embodiments, and variations and modifications may be made without departing from the scope of the present invention stated in the following claims.

Evidently, as described above in detail, according to the SVMR head of the present invention, since the magnetic direction of the hard ferromagnetic layer and the magnetic direction of the hard ferromagnetic layer become opposite to each other, a magnetic loop closes such that the pinned magnetic layer and the hard ferromagnetic layer are firmly coupled magnetically. Thereby, a magnetic field leaking externally from the hard ferromagnetic layer is constrained so as to hardly exert ill influences externally. Additionally, when the pinned magnetic layer and the hard ferromagnetic layer are subjected to influences of an external magnetic field, magnetic directions are also kept from inclining.

Therefore, by using the SVMR head of the present invention, a magnetic direction of the free magnetic layer revolves with respect to the signal magnetic field Hsig from a magnetic recording medium so as to vary the resistance of the SVMR element linearly.

## Claims

1. A spin valve magnetoresistive head including at least a free magnetic layer, a nonmagnetic metal layer, a pinned magnetic layer, a hard ferromagnetic layer applying a bias magnetic field to said pinned magnetic layer so as to fix a magnetic direction of said pinned magnetic layer, and an antiparallel coupling intermediate layer provided between said pinned magnetic layer and said hard ferromagnetic layer so as to make a magnetic direction of said bias magnetic field from said hard ferromagnetic layer substantially antiparallel to a magnetic direction of said hard ferromagnetic layer and apply the magnetic direction of said bias magnetic field to said pinned magnetic layer.

2. The spin valve magnetoresistive head as claimed in claim 1, wherein said hard ferromagnetic layer per se has a coercive force Hc equal to or more than at least 600 Oe.

3. The spin valve magnetoresistive head as claimed in claim 2, wherein said hard ferromagnetic layer and said pinned magnetic layer are composed of different materials, and said hard ferromagnetic layer is arranged to have the coercive force Hc larger than said pinned magnetic layer and a magnetic moment tBr equal to or larger than said pinned magnetic layer.

4. The spin valve magnetoresistive head as claimed in claim 3, wherein said pinned magnetic layer comprises a layer including cobalt-iron or cobalt-iron-boron, said hard ferromagnetic layer comprises a layer including one selected from a group consisting of cobalt, cobalt-chromium, cobalt-platinum, cobalt-chromium-tantalum, cobalt-chromium-platinum, cobalt-chromium-tantalum-platinum, samarium-cobalt, and cobalt-iron-oxide, and said antiparallel coupling intermediate layer comprises a layer including ruthenium.

5. The spin valve magnetoresistive head as claimed in one of claims 1 to 4, wherein an effective anisotropic magnetic field of said pinned magnetic layer is equal to or more than 600 Oe, and in a case where an external magnetic field is zero, the magnetic direction of said pinned magnetic layer and a magnetic direction of said free magnetic layer are arranged to be at a right angle or within 20 degrees before or after said right angle to each other.

6. The spin valve magnetoresistive head as claimed in claim 3, wherein terminal portions are provided on both ends of an element portion in track-width directions, the terminal portions including a lamination composed of at least a conductive layer and a antiferromagnetic layer.

7. The spin valve magnetoresistive head as claimed in claim 6, wherein said pinned magnetic layer of said element portion comprises a layer including cobalt-iron or cobalt-iron-boron, said hard ferromagnetic layer comprises a layer including one selected from a group consisting of cobalt, cobalt-chromium, cobalt-platinum, cobalt-chromium-tantalum, cobalt-chromium-platinum, cobalt-chromium-tantalum-platinum, and samarium-cobalt, said antiparallel coupling intermediate layer comprises a layer including ruthenium, and said antiferromagnetic layer of said terminal portions comprises a layer including one selected from a group consisting of palladium-platinum-manganese, platinum-manganese, palladium-manganese, nickel-manganese, chromium-manganese, and nickel oxide.

8. The spin valve magnetoresistive head as claimed in claim 3, wherein terminal portions are provided on both ends of an element portion in track-width directions, the terminal portions including a lamination composed of at least a conductive layer and a hard ferromagnetic layer.

9. The spin valve magnetoresistive head as claimed in claim 8, wherein said hard ferromagnetic layer of said element portion of the spin valve magnetoresistive head and said hard ferromagnetic layer of said terminal portions are composed of different materials.

10. The spin valve magnetoresistive head as claimed in claim 9, wherein said pinned magnetic layer of said element portion comprises a layer including cobalt-iron or cobalt-iron-boron, said hard ferromagnetic layer comprises a layer including one selected from a group consisting of cobalt, cobalt-chromium, cobalt-platinum, cobalt-chromium-tantalum, cobalt-chromium-platinum, cobalt-chromium-tantalum-platinum, and samarium-cobalt, said antiparallel coupling intermediate layer comprises a layer including ruthenium, and said hard ferromagnetic layer of said terminal portions' comprises a layer including one selected from a group consisting of cobalt, cobalt-chromium, cobalt-platinum, cobalt-chromium-tantalum, cobalt-chromium-platinum, cobalt-chromium-tantalum-platinum, samarium-cobalt, and cobalt-iron-oxide.

11. A composite-type magnetic head having a magnetic head used for reproducing and a magnetic head used for recording,
wherein said magnetic head used for reproducing is a spin valve magnetoresistive head including at least a free magnetic layer, a nonmagnetic metal layer, a pinned magnetic layer, a hard ferromagnetic layer applying a bias magnetic field to said pinned magnetic layer so as to fix a magnetic direction of said pinned magnetic layer, and an antiparallel coupling intermediate layer provided between said pinned magnetic layer and said hard ferromagnetic layer so as to make a magnetic direction of said bias magnetic field from said hard ferromagnetic layer substantially antiparallel to a magnetic direction of said hard ferromagnetic layer and apply the magnetic direction of said bias magnetic field to said pinned magnetic layer, said hard ferromagnetic layer per se has a coercive force Hc equal to or more than at least 600 Oe, said hard ferromagnetic layer and said pinned magnetic layer are composed of different materials, and said hard ferromagnetic layer is arranged to have the coercive force Hc larger than said pinned magnetic layer and a magnetic moment tBr equal to or larger than said pinned magnetic layer.

12. A magnetic recording medium drive device including a composite-type magnetic head opposite to surfaces of a magnetic recording medium and a recording medium, the composite-type magnetic head being used for recording/reproducing,
wherein a spin valve magnetoresistive head is mounted as a reproducing magnetic head unit of said composite-type magnetic head, the spin valve magnetoresistive head including at least a free magnetic layer, a nonmagnetic metal layer, a pinned magnetic layer, a hard ferromagnetic layer applying a bias magnetic field to said pinned magnetic layer so as to fix a magnetic direction of said pinned magnetic layer, and an antiparallel coupling intermediate layer provided between said pinned magnetic layer and said hard ferromagnetic layer so as to make a magnetic direction of said bias magnetic field from said hard ferromagnetic layer substantially antiparallel to a magnetic direction of said hard ferromagnetic layer and apply the magnetic direction of said bias magnetic field to said pinned magnetic layer, said hard ferromagnetic layer per se has a coercive force Hc equal to or more than at least 600 Oe, said hard ferromagnetic layer and said pinned magnetic layer are composed of different materials, and said hard ferromagnetic layer is arranged to have the coercive force Hc larger than said pinned magnetic layer and a magnetic moment tBr equal to or larger than said pinned magnetic layer.
